Europäisches Patentamt

European Patent Office

Office européen des brevets

(11) Veröffentlichungsnummer : **0 185 144**
**B1**

(12) . **EUROPÄISCHE PATENTSCHRIFT**

(45) Veröffentlichungstag der Patentschrift :
09.11.88

(21) Anmeldenummer : 85111102.1

(22) Anmeldetag : 03.09.85

(51) Int. Cl.⁴ : **A 62 B 19/02**, B 01 J 23/68,
B 01 J 23/22

(54) **Pt-Katalysator auf einem Träger als Luftreinigungsmittel.**

(30) Priorität : 15.12.84 DE 3445803

(43) Veröffentlichungstag der Anmeldung :
25.06.86 Patentblatt 86/26

(45) Bekanntmachung des Hinweises auf die Patenterteilung : 09.11.88 Patentblatt 88/45

(84) Benannte Vertragsstaaten :
DE FR GB IT SE

(56) Entgegenhaltungen :
DE-B- 1 417 648
US-A- 2 657 182
THE CHEMICAL SOCIETY OF JAPAN, Band 55, Nr. 9,
1982, Seiten 2706-2714; Y. KOSAKI et al.: "The oxidation of carbon monoxide on Pt/Al2O3 containing a
metal oxide"

(73) Patentinhaber : **Drägerwerk Aktiengesellschaft**
**Moislinger Allee 53-55**
**D-2400 Lübeck 1 (DE)**

(72) Erfinder : **Van der Smissen, Carl-Ernst, Dr.**
**Am Traveeck 30**
**D-2400 Lübeck (DE)**

## Beschreibung

Die Erfindung betrifft einen Katalysator zur Oxidation von Kohlenstoffmonoxid zur Verwendung in Luftfiltern mit einem Träger aus Alpha-Aluminiumoxid, imprägniert mit einer Vanadinverbindung.

In der Veröffentlichung « The Chemical Society of Japan », Band 55, Nr. 9, 1982, Seiten 2706-2714, ist ein Pt-Katalysator zur Oxidation von Kohlenstoffmonoxid beschrieben, der einen Träger aus einem Gemisch von Alpha-Aluminiumoxid und Vanadinoxid besitzt.

Ein weiteres Luftreinigungsmittel ist aus der ASME publication der American Society of Mechanical Engineers der Ausgabe 77-ENAs-28 bekannt.

Es katalysieren hier Platinmetalle auf Trägermaterialien die Umsetzung von CO mit Luftsauerstoff. Diese Eigenschaft wird auf granulierten, platinmetallhaltigen Trägern als Filtermasse für CO-Filter verwendet. Während das ebenfalls als Luftreinigungsmittel für CO-Filter bekannte Hopkalit unter dem Einfluß der Luftfeuchtigkeit seine Wirksamkeit verliert, ist die Filtermasse mit Pt-Katalysator im wesentlichen gegen Luftfeuchtigkeit beständig. Es hat sich jedoch bei höheren Feuchtegraden und vorübergehend auch bei hohen CO-Konzentrationen eine gewisse Leistungseinbuße gezeigt, zu deren Ausgleich ein größeres Volumen an Filtermasse vorgesehen werden muß. Außer erhöhtem Aufwand und Platzbedarf ist damit, z. B. bei dem Einsatz in Atemschutzfiltern, eine Gewichtsbelastung des Trägers gegeben.

Der Erfindung liegt die Aufgabe zugrunde, einen Katalysator der genannten Art so zu verbessern, daß auch bei hohen Luftfeuchtigkeiten und CO-Konzentrationen eine Leistungsabnahme vermieden und damit eine kleinere und leichtere Filterfüllung für Atemschutzfilter möglich wird.

Diese Aufgabe wird dadurch gelöst, daß der Träger mit einer zusätzlichen Imprägnierung aus einem elementaren Platinmetall und/oder einem Platinmetalloxid versehen ist.

Die mit der Erfindung erzielten Vorteile bestehen insbesondere darin, daß die Katalysatoren mit den Vanadinverbindungen wie z. B. den Vanadaten Substanzen enthalten, deren Oxidationsleistung von höheren Feuchtegraden nicht beeinträchtigt wird. Damit wird der sich dann bemerkbar machende Leistungsrückgang des Katalysators vermieden. Die durch die Anwendung der Platinmetalle oder Platinmetalloxide auf dem Träger erzeugte Fähigkeit zur katalytischen CO-Oxidation in trockenem Zustande wird durch die Vanadinimprägnierung nicht gestört. Während Doppelimprägnierungen häufig zu einer Einbuße einer Eigenschaft zugunsten einer anderen Eigenschaft führen, stören sich hier die Platinmetallimprägnierung und die Vanadinimprägnierung nicht. Im Gegenteil ergibt sich mit beiden Imprägnierungen sogar eine Verstärkung sowohl der Wirksamkeit im trockenen wie im feuchten Zustand als auch eine Stabilisierung gegenüber dem Auftreten hoher CO-Konzentrationen.

Unter den Vanadinverbindungen ist eine wäßrige Ammoniumvanadatlösung wegen ihrer starken oxidationsfördernden Eigenschaft geeignet. Dabei ist der Träger mit einer zusätzlichen Imprägnierung aus einer wäßrigen Palladiumchloridlösung versehen.

Die begünstigende Wirkung der CO-Oxidation auch unter hohen Luftfeuchtigkeiten wegen der Doppelimprägnierung macht die Verwendung des Katalysators in Atemschutzfiltern besonders vorteilhaft, weil er dann trotz des hohen Luftfeuchtegehaltes der Ausatemluft in seiner Katalysatorleistung nicht eingeschränkt wird. Diese Tatsache ermöglicht einen kleinen Filterbau auch bei hohen Filterleistungen.

Aufbau und Herstellung eines Luftreinigungsmittels nach der Erfindung sollen an einem Beispiel erläutert werden :

Alpha-Aluminiumoxid als Träger wird mit einer wäßrigen Lösung von Ammoniumvanadat getränkt, so daß sich auf dem Träger 1 Gew. % Vanadin befindet. Der imprägnierte Träger wird im Vakuum getrocknet und dann auf 200 °C erhitzt, so daß das Ammoniumvanadat in Vanadinpentoxid übergeführt wird. Der vanadinpentoxidhaltige Träger wird nun mit einer wäßrigen Lösung von Palladiumchlorid getränkt, so daß sich auf dem Träger 0,5 Gew. % Palladium befinden. Der getränkte Träger wird getrocknet und dann mit einer stark verdünnten Hydrazinlösung behandelt. Nach Reduktion des auf dem Träger befindlichen Palladiumchlorids wird die Hydrazinlösung abgegossen und der doppelt imprägnierte Träger mit Wasser gewaschen. Danach wird die Filtermasse getrocknet. Die fertige Filtermasse hat ausgezeichnete Oxidationswirkung für CO sowohl in trockenem Zustande als auch im Gleichgewicht mit 80 % relativer Feuchte bei 23 °C, und zwar bei niedrigen Konzentrationen von wenigen mL CO pro m³ Luft wie auch bei hohen Konzentrationen von 1,0 % und 1,5 % CO.

## Patentansprüche

1. Katalysator zur Oxidation von Kohlenstoffmonoxid zur Verwendung in Luftfiltern mit einem Träger aus Alpha-Aluminiumoxid, imprägniert mit einer Vanadinverbindung, dadurch gekennzeichnet, daß der Träger mit einer zusätzlichen Imprägnierung aus einem elementaren Platinmetall und/oder einem Platinmetalloxid versehen ist.

2. Katalysator zur Oxidation von Kohlenstoffmonoxid mit einem Träger aus Alpha-Aluminiumoxid, imprägniert mit einer Vanadinverbindung, dadurch gekennzeichnet, daß die Vanadinverbindung eine wäßrige Ammoniumvanadatlösung und der Träger mit einer zusätzlichen Imprägnierung aus einer wäßrigen Palladiumchloridlösung versehen ist.

3. Verwendung des Katalysators nach einem der Ansprüche 1 oder 2, zur Oxidation von Kohlenstoffmonoxid in Atemschutzfiltern.

## Claims

1. Catalyst for the oxidation of carbon monoxide, for use in air filters, with a support consisting of alpha-aluminium oxide, impregnated with a vanadium compound, characterized in that the support is provided with an additional impregnation of an elementary platinum metal and/or a platinum metallic oxide.

2. Catalyst for the oxidation of carbon monoxide with a support consisting of alpha-aluminium oxide, impregnated with a vanadium compound, characterized in that the vanadium compound is provided with an aqueous solution of ammonium-vanadate and the support is provided with an additional impregnation of an aqueous solution of palladium-chloride.

3. Utilization of the catalyst according to one of claims 1 or 2, for the oxidation of carbon monoxide in protective respiratory filters.

## Revendications

1. Catalyseur d'oxydation de l'oxyde de carbone prévu pour utilisation avec un support en oxyde d'aluminium alpha imprégné d'un composé de vanadium, caractérisé en ce que le support est pourvu d'une imprégnation supplémentaire de platine-métal élémentaire et/ou d'un oxyde de platine.

2. Catalyseur d'oxydation de l'oxyde de carbone prévu pour utilisation avec un support en oxyde d'aluminium alpha imprégné d'un composé de vanadium selon la revendication 1, caractérisé en ce que le composé de vanadium est une solution aqueuse de vanadate d'ammonium et en ce que le support est pourvu d'une imprégnation supplémentaire d'une solution aqueuse de chlorure de palladium.

3. Utilisation du catalyseur selon l'une des revendications 1 ou 2 pour l'oxydation de l'oxyde de carbone dans les filtres pour masques respiratoires.